# EUROPÄISCHE PATENTSCHRIFT

(11) **EP 0 344 091 B1**
(45) Veröffentlichungstag und Bekanntmachung des Hinweises auf die Patenterteilung: **03.11.1993**
(21) Anmeldenummer: 89730043.0
(22) Anmeldetag: 22.02.1989
(51) Int. Cl.: H04B 10/00

(54) **Empfangsvorverstärker für eine optische Nachrichtenübertragungsstrecke**
Receiving preamplifier for an optical information transmission link
Préamplificateur de réception pour liaison de transmission optique d'informations

(30) Priorität: 26.05.1988 DE 3818168
(43) Veröffentlichungstag der Anmeldung: 29.11.1989
(73) Patentinhaber: KRONE Aktiengesellschaft, D-14167 Berlin (DE)
(72) Erfinder: Aytac, Sungar, Dr., D-1000 Berlin 33 (DE); Gwiazdowski, Michael, D-1000 Berlin 62 (DE); Do Van, Hoang, D-1000 Berlin 12 (DE)

(56) Entgegenhaltungen:
- EP-A- 0 102 174
- EP-A- 0 172 694
- DE-A- 2 638 079
- GB-A- 2 096 852
- US-A- 4 567 446

## Beschreibung

Die Erfindung bezieht sich auf einen Empfangsvorverstärker gemäß dem Oberbegriff des Anspruches 1.

Aus der GB-A-2 096852 ist ein optischer Empfangsvorverstäker der gattungsgemäßen Art vorbekannt. Der Empfangsvorverstärker beinhaltet einen Verstärker, dem eine Photo-Diode als Empfangsdiode in Sperrichtung und in Reihe zur Empfangsdiode eine PIN-Diode in Durchlaßrichtung vorgeschaltet sind. Der Nachteil dieses Empfangsvorverstärkers mit einer Entzerrung über drei Dekaden ist,daß das Rauschen des Verstärkers nicht vernachlässigt werden kann, da es einen Empfindlichkeitsverlust bedeutet. Ein Empfindlichkeitsverlust ist nur zu vermeiden, wenn die Entzerrung aktiv und mehrstufig aufgebaut ist. Hierbei ist ein hoher Schaltungsaufwand sowie ein schwieriger Abgleich (der Entzerrer ist demzufolge toleranzempfindlich) notwendig.

Der Erfindung liegt von daher die Aufgabe zugrunde, einen Empfangsvorverstärker der gattungsgemäßen Art zu schaffen, der eine hohe Dynamik aufweist und der unter Vermeidung der im Stand der Technik vorhandenen Nachteile auch bei hohen Empfangslichtleistungen nicht übersteuert wird.

Die Lösung dieser Aufgabe ergibt sich aus den kennzeichnenden Merkmalen des Anspruches 1. Erfindungsgemäß arbeitet der Verstärker durch den Rückkopplungswiderstand bei kleinen Lichtleistungen als Transimpedenzverstärker, bei dem die Ausgangsspannung des Verstärkers dem Photostrom proportional ist und bei dem kein Entzerrer benötigt wird. Bei großen Lichtleistungen wird die Verstärkung des Verstärkers automatisch heruntergeregelt, so daß der Verstärker gerade nicht übersteuert wird. Da durch die Reduzierung der Verstärkung des Verstärkers die Bandbreite des Transimpedenzverstärkers lediglich um den Faktor 3 kleiner wird als die erforderliche Bandbreite, ist nur eine Entzerrerstufe notwendig.

Weitere vorteilhafte Ausgestaltungen der Erfindung ergeben sich aus den Unteransprüchen. Hingewiesen wurde insbesondere auf die Ausführung gemäß Anspruch 2, in der der Entzerrer eine PIN-Diode aufweist.

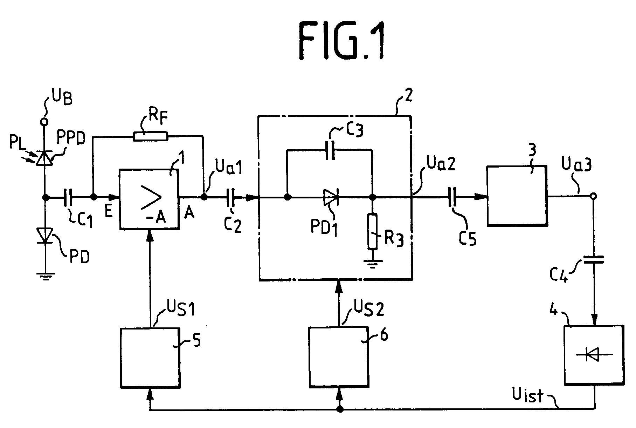

Die Erfindung ist nachfolgend anhand eines Ausführungsbeispiels eines Empfangsvorverstärkers näher erläutert. Die Figur 1 zeigt die Schaltungsanordnung des Ausführungsbeispiels eines Empfangsvorverstärkers mit einer Photodiode als Empfangsdiode.

In Figur 1 ist der Empfangsvorverstärker mit einer PIN-Photodiode PPD und mit einer Regelschaltung für den Verstärker 1 dargestellt.

Die Regelschaltung besteht aus einem Entzerrer 2, einem Puffer 3, einem Spitzenewertdetektor 4 und zwei Regelverstärkern 5 und 6. Dem Verstärker 1 sind eine in Sperrichtung geschaltete PIN-Photodiode PPD und ein Kondensator C1 vorgeschaltet. In Reihe zur PIN-Photodiode PPD ist eine PIN-Diode PD in Durchlaßrichtung geschaltet.

Am Eingang E und am Ausgang A des Verstärkers 1 ist ein hochohmiger Rückkopplungswiderstand R_{F} angeschlossen. Am Ausgang A des Verstärkers 1 liegt die Ausgangsspannung Uₐ₁ an. Hinter dem Verstärker 1 ist der Entzerrer 2 geschaltet, der aus einer über eine Spannung U_{S2} steuerbaren PIN-Diode PD1, einem festen Kondensator C3 und einem festen Widerstand R3 aufgebaut ist. Am Ausgang des Entzerrers 2 ist über einen Kondensator C4 der Spitzenwertdetektor 4 mit den beiden nachgeschalteten Regelverstärkern 5 und 6 geschaltet, die auf den Verstärker 1 und auf den Entzerrer 2 steuernd einwirken.

Aus der Ausgangsspannung Uₐ₃ des Puffers 3 gewinnt der Spitzenwertdetektor 4 einen Spannungs-Istwert U_{Ist}, aus dem der Regelverstärker 5 die Spannung Uₛ₁ und der Regelverstärker 6 die Spannung U_{S2} erzeugen. Des weiteren ist am Ausgang des Entzerrers 2 ein Puffer 3 geschaltet, an dessen Ausgang die Ausgangsspannung Uₐ₃ des Empfangsvorverstärkers abgegriffen wird.

Nachfolgend wird die Funktion des Empfangsvorverstärkers gemäß Figur 2 näher erläutert. Bei kleiner Empfangslichtleistung P_{L} ist der Widerstand der PIN-Diode PD größer als das Verhältnis des RückkopplungswiderstandeS zur Verstärkung A. Die Lichtleistung P_{L} ist somit dem Spitze-Spitze-Wert U_{a1SS} am Ausgang A des Verstärkers 1 und dem Rückkopplungswiderstand R_{F} direkt proportional. Die Ausgangsspannung U_{Ist} des Spitzenwertdetektors 4 ist dadurch Null.

Der Regelverstärker 5 mit seiner Ausgangsspannung U_{S1} und der Regelverstärker 6 mit seiner Ausgangsspannung U_{S2} sind so dimensioniert, daß eine gewünschte Verstärkung A erzeugt wird und der Widerstand der PIN-Diode PD1 so klein wird, daß der Entzerrer 2 nicht entzerrt.

Bei großer Empfangslichtleistung P_{L} ist der Widerstand der PIN-Diode PD kleiner als das Verhältnis des Rückkopplungswiderstandes R_{F} zur Verstärkung A. In diesem Fall hängt der Spitze-Spitze-Spannungswert U_{a1SS} nicht mehr vom Rückkopplungswiderstand R_{F} ab und erreicht seinen Maximalwert. Die erforderliche Empfindlichkeit wird durch den hochohmigen Rückkopplungswiderstand R_{F} erreicht.

Damit der Verstärker 1 nicht übersteuert wird, muß die Verstärkung A durch den Regelverstärker 5 herabgesetzt werden. In diesem Fall sinkt die obere Grenzfrequenz des Verstärkers 1 so, daß sein Frequenzgang durch den Entzerrer 2 entzerrt werden muß. Der Regelverstärker 6 mit der Ausgangsspannung U_{S2} regelt hierbei den Entzerrer 2 über die PIN-Diode PD1.

## Patentansprüche

1. Empfangsvorverstärker zum Empfang und zur Verstärkung von optischen Signalen einer optischen Nachrichtenübertragungsstrecke, die einen Verstärker (1) beinhaltet, dem eine Phodiode (PPD) als Empfangsdiode in Sperrichtung und in Reihe zur Empfangsdiode eine PIN-Diode (PD) in Durchlaßrichtung vorgeschaltet sind,
**dadurch gekennzeichnet**,
daß dem Verstärker (1) ein Kondensator (C1) vorgeschaltet und ein Entzerrer (2) und ein Spitzenwertdetektor (4) nachgeschaltet sind, der einen Spannungs-Istwert (UIst) für zwei den Verstärker (1) und den Entzerrer (2) steuernde Regelverstärker (5,6) vorgibt und daß der Verstärker (1) über einen Widerstand (RF) gegengekoppelt ist.

2. Empfangsvorverstärker nach Anspruch 1,
**dadurch gekennzeichnet**,
daß der Entzerrer (2) eine PIN-Diode (PD1) mit einem parallel geschalteten Kondensator (C3) aufweist.

3. Empfangsvorverstärker nach Anspruch 1 oder 2,
**dadurch gekennzeichnet**,
daß dem Entzerrer (2) ein Puffer (3) zur Verhinderung von Rückkopplungen nachgeschaltet ist.

## Claims

1. A receiving preamplifier for receiving and amplifying optical signals of an optical communication path, comprising an amplifier (1) upstreams to which are connected a photodiode (PPD) in the non-conducting direction as a receiving diode and in series to said receiving diode, a PIN diode (PD) in the conducting direction, characterized by that upstreams to the amplifier (1), a capacitor (C1) is connected, and downstreams thereto, an equalizer (2) and a peak detector (4) are connected, said peak detector giving an actual voltage value (UIst) for two control amplifiers (5, 6) controlling the amplifier (1) and the equalizer (2), and that the amplifier is negatively fed back over a resistor (RF).

2. A receiving preamplifier according to claim 1, characterized by that the equalizer (2) comprises a PIN diode (PD1) having a capacitor (C3) connected in parallel thereto.

3. A receiving preamplifier according to claim 1 or 2, characterized by that downstreams to the equalizer (2), a buffer (3) is connected for preventing feedback.

## Revendications

1. Préamplificateur de réception pour la réception et amplification de signaux optiques d'une ligne de transmission d'informations optiques, comprenant un amplificateur (1), auquel sont raccordées en amont une photodiode (PD) en sens de non-conduction comme diode de réception et, en série à la diode de réception, une diode PIN (PD) en sens de conduction,
caractérisé en ce qu'à l'amplificateur (1) sont raccordés en amont un condensateur (C1) et en aval un égalisateur (2) et un indicateur de crête (4), qui donne une valeur actuelle de la tension (UIst) pour deux amplificateurs de réglage (5, 6) commandant l'amplificateur (1) et l'égalisateur (2) par l'intermédiaire d'une résistance (RF).

2. Préamplificateur de réception selon la revendication 1,
caractérisé en ce que l'égalisateur (2) comprend une diode PIN (PD1) ayant un condensateur (C3) en parallèle.

3. Préamplificateur de réception selon la revendication 1 ou 2,
caractérisé en ce qu'à l'égalisateur (2) est raccordé en aval un tampon (3) pour prévenir des réinjections.
